# EUROPÄISCHE PATENTANMELDUNG

(11) **EP 2 631 278 A1**
(43) Veröffentlichungstag der Anmeldung: **28.08.2013**
(21) Anmeldenummer: 13154332.4
(22) Anmeldetag: 07.02.2013
(51) Int. Cl.: C09J 7/04

(54) **Klebeband mit einem Trägermaterial mit verbesserter Handeinreißbarkeit**

(30) Priorität: 21.02.2012 DE 102012202635
(71) Anmelder: Tesa SE, 20253 Hamburg (DE)
(72) Erfinder: Schliephacke, Ralf, 25524 Itzehoe (DE); Kerep, Patrick, 22767 Hamburg (DE); Ertas, Irfan, 22527 Hamburg (DE)

(57) **Zusammenfassung**

Die Erfindung betrifft ein Klebeband mit einem Trägermaterial, auf das zumindest einseitig eine Klebemasse aufgetragen ist, wobei das Trägermaterial zumindest an einer der in Maschinenrichtung verlaufenden Kante zumindest einen insbesondere zackenförmigen Einschnitt aufweist, der in einer Spitze endet und dessen Spitze durch einen an der Spitze beginnenden und in medialer Richtung verlaufenden Schnitt verlängert ist.

## Beschreibung

Die Erfindung betrifft ein Klebeband mit einem Trägermaterial mit verbesserter Handeinreißbarkeit.

Das Problem der Handeinreißbarkeit bei Klebebändern ist seit langem bekannt. Insbesondere Klebebänder mit Trägern aus Kunststofffolien lassen sich meist schlecht von Hand abreißen, ein Messer oder eine Schere müssen hierfür zur Hilfe genommen werden.

Wegen dieser für die Praxis so wichtigen Anforderung ist dieses Problem von verschiedenen Seiten angegangen worden. So gibt es spezielle Trägerfolien, die papierähnliche Eigenschaften haben und die somit sehr gut einreißbar sind.

Es ist auch schon vorgeschlagen worden, den Folienträger eines Klebebandes zu perforieren.

Bei Folienträgern ist des Weiteren der Zackenschnitt verbreitet, so zum Beispiel bei doppelseitigen Klebebändern zur Fixierung von Teppichböden. Mit der DE 43 18 277 C1 ist die Verwendung von Zackenschnittmessern zum Längsschneiden von doppelseitig klebenden Selbstklebebändern mit Polypropylenträgern bekannt geworden, die insbesondere als Teppichverlegeband Verwendung finden. Aufgrund der Zackung der Schnittkante erhöht sich die Handeinreißbarkeit des Klebebands.

Im Bereich der (Selbst-)Klebebänder werden neben Trägermaterialien auf Basis von Polymerfolien und Papier auch solche auf Basis von Vliesen und Geweben verwendet. In den Bereich der Gewebe fallen im weiteren Sinn auch solche, die als so genannte Filamentklebebänder ein Trägermaterial enthalten, das aus einer optionalen Stützfolie und in Längsrichtung integrierten, ungezwirnten und ungetengelten oder gezwirnten oder getengelten Filamenten beziehungsweise aus einer optionalen Stützfolie und einem offenen Gewebe oder Gelege aus ungezwirnten und ungetengelten oder gezwirnten oder getengelten Filamenten besteht. Die Filamente bestehen im Allgemeinen aus hochfesten Fasern geringer Reißdehnung, wie zum Beispiel Glasfasern oder auch aus möglicherweise verstreckten Polymerfasern wie Polyesterfasern, Polypropylenfasern, Polyethylenfasern, Polyamidfasern oder Aramid-Fasern.

Der Zackenschnitt kann ebenfalls vorteilhaft genutzt werden, um die Handeinreißbarkeit von Geweben zu verbessern. Die meisten Gewebe setzen Einreißversuchen von Hand durch die Festigkeit der Einzelfasern und die Flexibilität des Gewebes so viel Widerstand entgegen, dass ein Einriss an einer geraden Schnittkante von Hand nahezu unmöglich ist oder nur mit großer Mühe erreicht werden kann. Da diese Handeinreißbarkeit aber bei der häufigen Verarbeitung von zum Beispiel Rollenpflastern oder Haftklebebändern zur Erleichterung der Handhabung gewünscht wird, weist auch hier der Zackenschnitt seine Vorteile auf. Der Riss geht dabei typischerweise von der Innenecke einer in Richtung Klebebandmitte zeigenden zackenförmigen Ausstanzung aus. Einmal begonnen lässt sich der Riss in dichten Geweben meist ohne große Mühe je nach Schnittrichtung parallel zu Kette oder Schuss fortsetzen.

Die DE 102 23 631 A1 offenbart ein Klebeband mit einer quer zur Ablängrichtung weiterreißbaren Folie als Trägermaterial, auf die auf der einen Seite eine Klebemasse mit einem Flächengewicht von mindestens 40 g/m² beschichtet ist, und auf der auf der anderen, der Klebemasse gegenüberliegenden Seite ein Release vorhanden ist, wobei eine oder beide Längskanten des Klebebandes über den gesamten Bereich Einkerbungen mit einer Breite von weniger als 1000 µm und einer Tiefe kleiner 100 µm aufweisen, wobei die Einkerbungen unregelmäßig angeordnet und von unterschiedlicher Tiefe sind.

Die DE 102 23 632 A1 beschreibt die Verwendung eines Klebebands zur Abdeckung bei Maler- und Lackieranwendungen mit einer quer zur Ablängrichtung weiterreißbaren Folie als Trägermaterial, auf die einseitig eine Klebemasse aufgetragen ist, wobei das Klebeband farbig und/oder nicht transparent ist und eine oder beide Längskanten des Klebebandes über den gesamten Bereich Einkerbungen mit einer Breite von weniger als 1000 µm und einer Tiefe von kleiner 100 µm aufweisen, wobei die Einkerbungen unregelmäßig angeordnet und von unterschiedlicher Tiefe sind.

Aus der DE 102 23 634 A1 ist ein Klebeband mit einer quer zur Ablängrichtung weiterreißbaren Folie als Trägermaterial bekannt, auf die ein- oder beidseitig eine Klebemasse aufgetragen ist und bei der eine der beiden Längskanten eine raue Schnittkante in der Form aufweist, dass über den gesamten Bereich Einkerbungen in einer Häufigkeit von mindestens 1 Stück/mm vorhanden sind, wobei die Einkerbungen unregelmäßig angeordnet und von unterschiedlicher Tiefe sind, und die andere Längskante im wesentlichen glatt ist und diese Einkerbungen nicht oder in der Anzahl stark vermindert aufweist.

Aus der FR 1,522,942 A ist ein einschlägiges Klebeband bekannt, dessen eine Kante mikroskopische Einkerbungen aufweist.

Die CH 500 275 A beschreibt eine Selbstklebebandrolle, deren Klebeband einen biegsamen, halbsteifen, hochzugfesten und hoch dehnungsfähigen Untergrundfilm mit einer Dicke von ungefähr 25 bis 50 µm aufweist, der einen Beschichtung aus einem selbstklebenden druckempfindlichen Klebstoff aufweist. Der Untergrundfilm des Bandes ist mit unbemerkbaren, aneinandergereihten Mikroeinkerbungen an den Kanten versehen, so dass das Band rein manuell eingerissen und abgetrennt werden kann.

Bei der Verarbeitung von Geweben ist es darüber hinaus seit langer Zeit bekannt, dass der Ausriss einzelner Fäden vermieden werden kann, indem der Schnitt nicht gerade, sondern zickzack-förmig ausgeführt wird. Dadurch werden die zur Schnittkante parallelen Fäden in regelmäßigen Abständen quer durchtrennt und können nicht in einem längeren Stück herausgezogen werden. Herausfallende kurze Fadenfragmente stören die folgende Verarbeitung meist deutlich weniger als lange Fäden und werden daher akzeptiert. Dies ist der Grund dafür, dass in der Literatur zahlreiche Vorrichtungen bekannt sind, die derartige Zackenschnitte erzeugen.

Eine weitere Methode, den Faserausriss zu vermeiden, ist es, das Gewebe beim oder nach dem Schnitt thermisch zu verschweißen. Das kann allerdings nur bei thermoplastischen Materialien wie zum Beispiel Polyester, Nylon oder Polypropylen genutzt werden, nicht jedoch zum Beispiel bei Naturfasern, Glas oder Kevlar.

Werden Gewebe allerdings durch Beschichtungen, Imprägnierungen oder auf thermischem Wege fixiert, besteht die Gefahr eines Faserausrisses nicht mehr oder nur noch in unwesentlichem Maß, so dass auf Gegenmaßnahmen wie den Zackenschnitt verzichtet wird.

Die Gefahr des Faserausrisses ist bei den geschilderten Filament-Klebebändern dann besonders groß, wenn die verwendeten Filamente direkt an der Schnittkante liegen und daher in Längsrichtung durchtrennt werden und wenn die Filamente bedingt durch die in den Filamenten parallel und dicht aneinander liegenden Einzelfasern nicht vollständig durch Haftklebernasse oder andere Beschichtungen durchtränkt sind. Somit liegen Einzelfasern im Zentrum der Filamente oft lose und ungebunden vor und können bei einem parallelen Durchtrennen des Filamentes an der Schnittkante leicht herausfallen, insbesondere wenn es sich weder um gesponnene, noch um gezwirnte oder getengelte Filamente handelt.

Die herausgefallenen Einzelfasern können sich in der Folge auf kontinuierlich laufenden Verarbeitungsmaschinen leicht um drehende Wellen und andere Bahnführungselemente wickeln und schließlich zu erheblichem Reinigungsaufwand, Klebeband-Abrissen oder sogar Produktionsstillstand fuhren. Das aber ist aus wirtschaftlichen Gründen nicht akzeptabel und würde die Einsetzbarkeit derartiger Filament-Klebebänder in kontinuierlichen Prozessen unmöglich machen.

Gleichzeitig muss bei der Suche nach Gegenmaßnahmen gegen den beschriebenen Faserausriss bedacht werden, dass die genannten Filament-Selbstklebebänder besonders dann zum Einsatz kommen, wenn eine besonders hohe Zugfestigkeit bei besonders geringer Dehnbarkeit benötigt wird. Daher muss die Zugfestigkeit unter allen Umständen weitgehend erhalten werden. Auch eine Verringerung der Einreißkraft und der Weiterreißkraft ist nicht akzeptabel, da das dem Zweck des Klebebandes zuwider laufen würde.

Aufgabe der Erfindung ist es, ein Klebeband mit guter Handeinreißbarkeit einerseits und bei Klebebändern mit textilen Trägern oder mit Filament verstärkten Trägern den Ausriss von störenden Fasern oder Filamenten aus mit diesen verstärkten Klebebänden zu vermeiden, ohne die Zugfestigkeit wesentlich zu vermindern.

Gelöst wird diese Aufgabe durch ein Klebeband, wie es im Hauptanspruch niedergelegt ist. Gegenstand der Unteransprüche sind dabei vorteilhafte Weiterbildungen des Klebebands.

Demgemäß betrifft die Erfindung ein Klebeband mit einem Trägermaterial, auf das zumindest einseitig eine Klebemasse aufgetragen ist, wobei das Trägermaterial zumindest an einer der in Maschinenrichtung verlaufenden Kante zumindest einen insbesondere zackenförmigen Einschnitt aufweist, der in einer Spitze endet und dessen Spitze durch einen an der Spitze beginnenden und in medialer Richtung, das heißt in Richtung der Trägermitte, verlaufenden Schnitt verlängert ist.

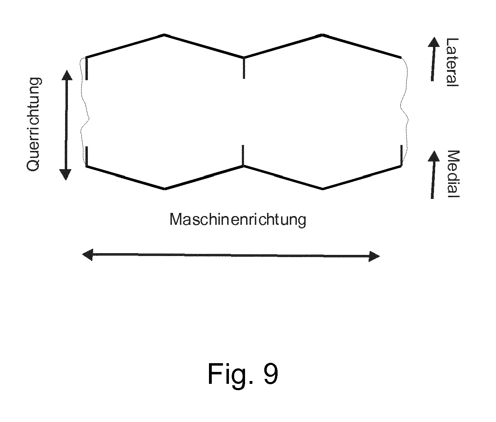

In der Figur 9 sind an einem erfindungsgemäßen Trägermaterial die im Weiteren verwendeten Richtungsbezeichnungen dargestellt.

Weiter vorzugsweise weist das Trägermaterial zumindest an einer der in Maschinenrichtung verlaufenden Kante mehrere insbesondere zackenförmige Einschnitte auf, der in einer Spitze enden, wobei zumindest die Spitze eines insbesondere zackenförmigen Einschnitts durch einen an der Spitze beginnenden und in medialer Richtung verlaufenden Schnitt verlängert ist.

Der Verlauf der Schnittkante des Klebebands ist dergestalt, dass in vorgegebenen Abständen Einschnitte in zumindest eine der beiden Kanten des Trägermaterials vorhanden sind. Die Abstände können dabei beliebig sein, wobei, wenn alle Einschnitte direkt aneinander anschließen, die Abstände gleich null sind, also nicht vorhanden sind. Jeder Einschnitt setzt sich ausgehend von einem bestimmten Punkt bis zur tiefsten Stelle fort, dem so genannten Minimum. Die Minima bilden die medialen Spitzen der Einschnitte. Die Tiefe bezieht sich hier auf die in Maschinenrichtung des Klebebandes orthogonale Achse, welche von der Klebebandseitenkante in Richtung Klebebandmittellinie verläuft.

Anschließend nimmt die Tiefe des Einschnitts im weiteren Verlauf wieder ab, bis der nächste Wendepunkt erreicht ist und die Tiefe wieder zunimmt. Dieser Punkt stellt ein Maximum dar. Die Maxima bilden die lateralen Spitzen der Einschnitte.

Es wird darauf hingewiesen, dass im Falle von Abständen zwischen den Einschnitten die Maxima linienförmig ausgebildet sind.

Ein Maximum muss dabei nicht zwingend mit dem Punkt auf der Kante, der bezogen auf die Trägermitte den größten Abstand von der Trägermitte aufweist, identisch sein, es können verschieden gestaltete und auch verschieden tiefe Einschnitte kombiniert werden, so dass auch relative Maxima auftreten können.

Jeder Einschnitt ist durch zwei Maxima begrenzt, wobei sich zwischen diesen ein Minimum befindet.

In einer vorteilhaften Ausgestaltung der Erfindung liegen, insbesondere bei einem regelmäßigen Kantenverlauf, alle Maxima sowie alle Minima auf jeweils einer Geraden, die parallel zur Trägermitte in Maschinenrichtung ausgerichtet sind.

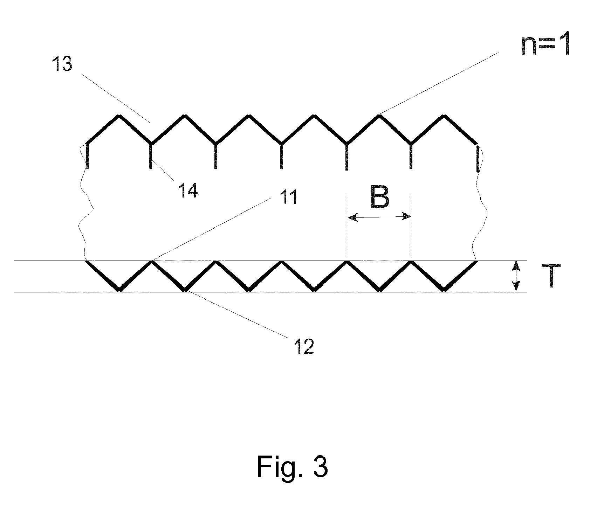

Jeder einzelne Einschnitt im Randbereich des Klebebands, also an zumindest einer der Längskanten, weist eine bestimmte Tiefe T sowie eine bestimmte Breite B auf. Die Tiefe T (siehe Figur 3) erstreckt sich dabei von dem äußersten Punkt des Einschnitts bis zur tiefsten Stelle im Einschnitt. Die Breite des Einschnitts ist definiert als der Abstand zwischen den beiden Punkten, die den Einschnitt begrenzen, also der Abstand zwischen zwei Maxima im Verlauf der Schnittkante.

Die Einschnitte an zumindest einer Längskante können unregelmäßig angeordnet sein. Die Einschnitte können beabstandet voneinander oder unmittelbar hintereinander angeordnet sein. Es ist aber auch möglich, diese abwechselnd beabstandet voneinander und unmittelbar hintereinander anzuordnen.

Gemäß einer bevorzugten Ausführungsform der Erfindung beträgt der Abstand zwischen den Einschnitten zwischen 2 und 3 mm, weiter vorzugsweise 2 mm.

In einer vorteilhaften Ausführungsform der Erfindung werden die Einschnitte von einem Streckenzug aus bevorzugt gleich langen Strecken gebildet, die n Punkte miteinander verbinden, wobei n zwischen 1 und 9 liegen kann und eine ungerade Zahl ist. Dann bildet ein Punkt, in dem zwei Strecken aufeinander treffen, den tiefsten Punkt des Streckenzuges, das heißt die mediale Spitze. Weiter vorzugsweise sind die zwischen den einzelnen Strecken vorhandenen Winkel ebenfalls alle gleich groß.

Folgende Werte für n haben sich als besonders vorteilhaft erwiesen:
● n gleich 1, so dass der Einschnitt die Form eines gleichschenkligen Dreiecks aufweist, oder
● n gleich 3 ist, so dass der Einschnitt die Form eines halben Oktogons aufweist.

Gemäß einer besonders vorteilhaften Ausführungsform bilden Einschnitte eine geschlossene Zick-Zack-Linie. Diese Zick-Zack-Linie ist dem Fachmann auch als Zackenschnitt bekannt.

Der Zackenschnitt besteht aus einer Aneinanderreihung von zackenförmigen (also dreiecksförmigen), in einer vorteilhaften Ausführungsform identischen Einkerbungen, die zumindest an einer der Längskanten des Klebebands vorhanden sind.

Die Einkerbungen bestehen aus kurzen Strecken in stumpfen, rechten oder spitzen Winkeln, wobei diese zwei parallel Linien beschreiben. Ein Zick-Zack-Muster wird durch wiederholte Spiegelung einer Geraden konstruiert.

Ein typisches Beispiel ist der folgende Streckenzug: /\/\/\/\/\/\/\/\, der auch als Dreieckswelle bezeichnet wird.

Ein solcher Streckenzug ist der Kantenschnitt, wie er in Figur 3 gezeigt ist. Bei diesem Streckenzug ist der Wert n = 1.

In der Figur 3 ist der Abschnitt eines Klebebands mit einem Trägermaterial gezeigt, dessen obere Kante die erfindungsgemäße Schnittgeometrie aus Einschnitten 13 in einer Zickzacklinie aufweist, wobei die zackenförmigen Einschnitte 13 in einer medialen Spitze 11 enden. Die Spitzen 11 sind durch einen an der Spitze 11 beginnenden und in medialer Richtung verlaufenden Schnitt 14 verlängert.

Zwischen zwei medialen Spitzen 11 befindet sich stets eine laterale Spitze 12.

In der unteren Kante sind Einschnitte in einer Zickzacklinie vorhanden.

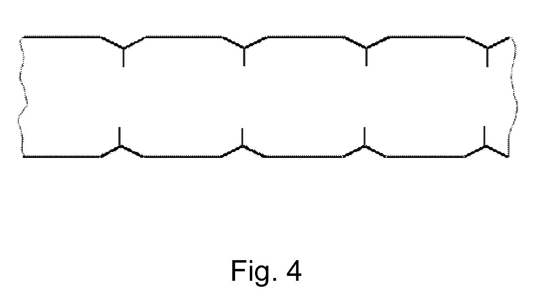

Eine Variante des Zackenschnitts ist in Figur 4 gezeigt, und zwar sind hier die Zacken nicht unmittelbar hintereinander angeordnet, sondern weisen Abstände auf.

Zu den Zick-Zack-Linien gehört auch die Sägezahnwelle, die aus einer in einem Winkel zur Querrichtung ausgerichtete Strecke besteht, an die sich eine zur Querrichtung parallel angeordneten Strecke anschließt, wobei die beiden Strecken abwechselnd einen geschlossenen Streckenzug bilden.

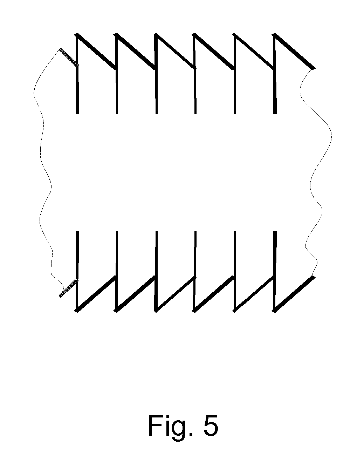

Diese Ausführungsform der Erfindung zeigt Figur 5.

Bei den geschilderten sehr regelmäßigen Schnittkantenverläufen haben alle Maxima sowie alle Minima jeweils den gleichen Abstand zur Trägermitte.

In einer anderen vorteilhaften Ausführungsform der Erfindung werden die Einschnitte gebildet, indem die Kante zwischen zwei medialen Spitzen in regelmäßigen Abständen aus einem Streckenzug aus bevorzugt gleich langen Strecken gebildet wird, die n Punkte miteinander verbinden, wobei n zwischen 1 und unendlich (dann bildet der Streckenzug eine Kurve) liegen kann, so dass im Kantenbereich von der Trägermitte weg ragende Dreiecke, Trapeze, Halbellipsen oder regelmäßige Kreisbögen stehen bleiben und die dazwischen befindlichen Abschnitte ausgeschnitten oder ausgestanzt werden. Weiter vorzugsweise sind auch hier die zwischen den einzelnen Strecken vorhandenen Winkel ebenfalls alle gleich groß.

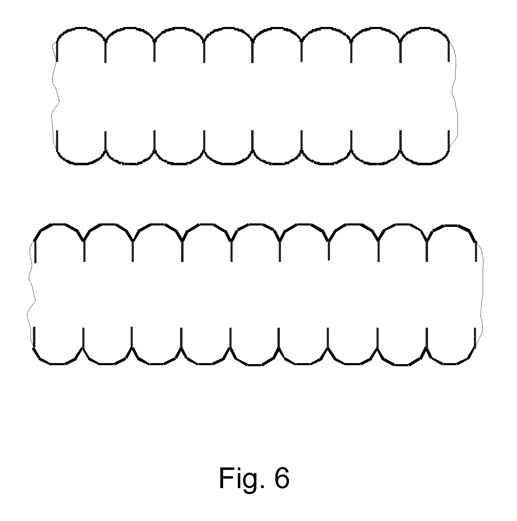

Derartige gestaltete Ausführungsformen der Erfindung zeigt die Figur 6. Im Kantenbereich bleiben die mathematischen Figuren wie Dreiecke, Trapeze oder Halbellipsen stehen und die dazwischen befindlichen Abschnitte werden ausgeschnitten oder ausgestanzt.

In Varianten können die Einschnitte als aus der Heraldik bekannte Wappenschnitte ausgeformt sein. Beispielhaft und ohne die Aufzählung damit beschränken zu wollen, seien der Bogenschnitt, der zu ein- oder ausgerundeten Spritzen führt, der Eisenhutschnitt, der Flammenschnitt, der Kerbzinnenschnitt und der Palisadenschnitt genannt.

Die lateralen Spitzen, also die Maxima können abgerundet sein, also einen Radius aufweisen.

Der Winkel an den medialen Spitzen der bevorzugt zackenförmigen Einschnitte liegt gemäß einer weiteren vorteilhaften Ausführungsform zwischen 10° und 170°, weiter vorzugsweise zwischen 60° und 120°. Besonders in der Praxis bewährt haben sich Winkel von 60°, 90° oder 120°.

Das Trägermaterial weist gemäß einer weiteren vorteilhaften Ausführungsform der Erfindung zumindest an einer der in Maschinenrichtung verlaufenden Kante mehrere insbesondere zackenförmige Einschnitte auf, wobei zumindest jede fünfte, vorzugsweise jede vierte, weiter vorzugsweise jede dritte, besonders vorzugsweise jede zweite, ganz besonders jede mediale Spitze der insbesondere zackenförmigen Einschnitte durch einen an der Spitze beginnenden und in medialer Richtung verlaufenden Schnitt verlängert ist.

Besonders bevorzugt ist die Variante, wenn weiter vorzugsweise die zackenförmigen Einschnitte gleichzeitig eine geschlossene Zick-Zack-Linie bilden.

Die der mit den Einschnitten versehenen gegenüberliegende Kante kann grundsätzlich jede beliebige Form aufweisen. Die Kante kann glatt sein, also ohne irgendwelche Einschnitte. Die Kante kann sodann alle Schnittformen aufweisen, wie sie oben ausführlich geschildert sind, insbesondere einen Zackenschnitt.

Schließlich ist vorteilhaft, wenn das Trägermaterial an beiden in Maschinenrichtung verlaufenden Kanten insbesondere zackenförmige Einschnitte aufweist, bei denen zumindest mehrere, vorzugsweise alle Spitzen durch einen an der Spitze beginnenden und in medialer Richtung verlaufenden Schnitt verlängert sind.

Auch dann ist die vorteilhafteste Variante die, bei der die zackenförmigen Einschnitte gleichzeitig an beiden Kanten eine geschlossene Zick-Zack-Linie bilden und jede mediale Spitze durch einen an der Spitze beginnenden und in medialer Richtung verlaufenden Schnitt verlängert sind.

In einer vorteilhaften Ausführungsform der Erfindung werden die von den medialen Spitzen ausgehenden Schnitte von Schnitten gebildet, die sich von den medialen Spitzen ausgehend in Richtung der Mitte des Trägermaterials, also in medialer Richtung erstrecken.

Die Schnitte können gerade in Form eines Geradenstücks verlaufen, wobei der Winkel zwischen Schnitt und Kante des Klebebands beliebig gewählt werden kann. Bevorzugt sind Schnitte, die in Querrichtung verlaufen, also einen rechten Winkel mit der Kante bilden.

Die Schnitte können des Weiteren jeden beliebigen regel- oder unregelmäßigen Kurvenverlauf aufweisen wie beispielsweise die Form einer Sinuslinie.

Weiter vorzugsweise sind die Schnitte alle gleichlang.

In einer weiteren vorteilhaften Ausführungsform der Erfindung gehen von den medialen Spitzen gleichzeitig zumindest zwei Schnitte aus, die sich in Richtung der Mitte des Trägermaterials, also in medialer Richtung erstrecken. Diese Schnitte können deine identische Form aufweisen, können aber auch unterschiedlich ausgeformt sein. Bevorzugt sind Ausführungsformen, bei denen maximal zwei Schnitte von den medialen Spitzen ausgehen.

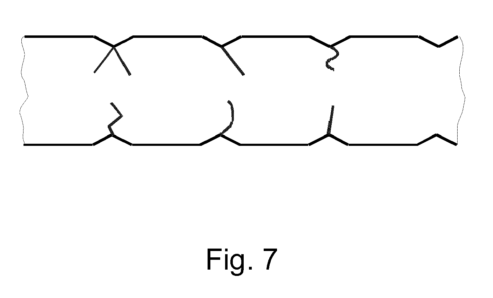

In der Figur 7 sind unterschiedliche Schnittvarianten gezeigt. Der Schnitt kann die Form eines Geradenstücks haben, der einen Winkel zur Querachse des Trägermaterials aufweist, der Schnitt kann bogenförmig sein, der Schnitt kann kurvenförmig sein, an einer medialen Spitze können mehrere Schnitte ansetzen.

Die zackenförmigen Einschnitte weisen gemessen von der in Maschinenrichtung verlaufenden Kante gemäß einer weiteren vorteilhaften Ausführungsform in Querrichtung eine Tiefe von 0,3 bis 6 mm, insbesondere bis 1 bis 3 mm, ganz besonders 2 mm bis 2,5 mm auf.

Bei unregelmäßigem Kantenverlauf (wenn beispielsweise viele Zacken mit unterschiedlicher Höhe vorhanden sind) entspricht die Tiefe dem Abstand zwischen zwei Linien, die sich wie folgt ergeben:

Ausgehend von der Trägermitte wird eine erste Linie, die parallel zur Mittellinie des Träger ausgerichtet ist, lateral (also exakt in Querrichtung) verschoben, bis die Linie auf das Maximum trifft, das den größten Abstand von der Trägermitte aufweist.

Zur Bestimmung der Zackenhöhe wird ausgehend von der Trägermitte eine zweite Linie, die parallel zur Mittellinie des Träger ausgerichtet ist, lateral (also exakt in Querrichtung) verschoben, bis die Linie auf das zu bestimmende Minimum trifft.

Der Abstand zwischen den beiden parallelen Linien entspricht dann der Tiefe des Zackens (siehe auch Figur 3).

Die Schnitte weisen gemäß einer weiteren vorteilhaften Ausführungsform gemessen von der Spitze des Einschnitts eine Länge von 0,3 bis 4 mm, insbesondere bis 1 bis 3 mm, ganz besonders 2 mm bis 2,5 mm auf.

Die Häufigkeit der Einschnitte beträgt vorzugsweise mindestens 1 Stück/1 cm, bevorzugt maximal 10 Stück/1 cm, weiter bevorzugt zwischen 4 und 8 Stück/cm.

Als Trägermaterial für das Klebeband eignen sich Laminate, Folien (zum Beispiel BOPP, MOPP, PP, PE, Polyester wie PET, PA, PU, PVC), Schaumstoffe, geschäumte oder metallisierte Folien. Die Folien selbst können wiederum aus mehreren einzelnen Lagen besteht, beispielsweise aus zu einer Folie coextrudierten Lagen.

Bevorzugt werden Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-Block-Copolymere).

Erfindungsgemäß hervorragend als Folien einsetzen lassen sich monoaxial und biaxial gereckte Folien. Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet.

Besonders bevorzugt sind Folien auf Basis Polyester, bevorzugt Poyethylenterepehthalat, oder insbesondere Polypropylen.

Die Folie weist vorzugsweise eine Dicke von 10 µm bis 100 µm, weiter vorzugsweise 19 bis 30 µm auf.

Die Folie kann farbig und/oder transparent sein. Die Folie kann unverstreckt sein.

Wenn als Trägermaterial ein Textil gewählt wird, können als textiler Träger alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden.

Besonders bevorzugt wird als Trägermaterial folgendes Gewebe eingesetzt:
● Garnstärke der Kettfäden: 55 dtex bis 130 dtex, vorzugsweise 55 dtex bis 110 dtex, weiter vorzugsweise 70 dtex bis 80 dtex.
● Fadenzahl für die Kettfäden: 5 bis 15, vorzugsweise 8 bis 120
● Garnstärke der Kettfäden: 100 dtex bis 250 dtex, vorzugsweise 150 dtex bis 200 dtex, weiter vorzugsweise 160 dtex bis 170 dtex.
● Fadenzahl für die Kettfäden: 10 bis 30, vorzugsweise 14 bis 20
● Leinwandbindung (Standard für jedes bekannte handeinreißbare Band), Köperbindung, Atlasbindung

Gemäß einer weiteren vorteilhaften Ausführungsform der Erfindung handelt es sich bei dem Gewebe um ein Polyestergewebe, insbesondere PET-Gewebe. Weitere Möglichkeiten sind Polyamidgewebe, Viskosegewebe und/oder ein Mischgewebe aus den genannten Materialien.

Die Fäden können aus gesponnenen Garnen oder Filamentgarnen (Endlosgarnen) bestehen. Üblicherweise wird Filamentgarn eingesetzt. Dieses besteht aus einer festgelegten Anzahl von Einzelfilamenten und kann texturiert oder glatt und punktverfestigt oder unverfestigt vorliegen.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind. Bekannt sind Malivliese, Maliwatte, Kunitvliese oder Multiknitvliese.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Als Ausgangsmaterialien für den textilen Träger sind insbesondere (Chemie-) Fasern (Stapelfaser oder Endlosfilament) aus synthetischen Polymeren, auch synthetische Fasern genannt, aus Polyester wie Polyethylenterephthalat (PET), Polyamid, Polyimid, Aramid, Polyolefin, Polyacrylnitril, Polymilchsäure (PLA) oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des textilen Trägers eingesetzt werden.

Des Weiteren sind Garne, gefertigt aus den angegebenen Fasern, ebenfalls geeignet. Stapelfasern sind Einzelfasern, die in ihrer Länge begrenzt sind. Das Gegenteil von Stapelfasern sind Filamente (Endlosfasern). Alle Naturfasern sind Stapelfasern, da sie nur bis zu einer bestimmten Länge vorkommen. Alle Chemiefasern können zu Stapelfasern geschnitten werden. Im Folgenden werden die Stapelfasern auch vereinfacht nur Fasern genannt.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Die Kettfäden und/oder die Schussfäden können dabei jeweils nur aus synthetischen Fäden oder aus Fäden aus natürlichen Rohstoffen bestehen.

Gemäß einer weiteren bevorzugten Ausführungsform der Erfindung liegt das Flächengewicht des textilen Trägers, der beispielsweise aus einem Gewebe besteht, zwischen 30 g/m² und 180 g/m².

In einer weiteren vorteilhaften Ausführungsform der Erfindung besteht das Trägermaterial aus einer Trägerlage, deren Festigkeit in Längsrichtung durch integrierte beziehungsweise angefügte Fasern oder Filamente verstärkt ist.

Im Sinne dieser Erfindung wird unter einem Filament ein Bündel paralleler, gerader Einzelfasern verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen - sowie für die mit Fasern verstärkte Ausführungsform - verallgemeinernd nur noch der Begriff Filament verwendet.

Ist die Trägerlage ausschließlich durch in Längsrichtung integrierte/angefügte Filamente verstärkt, spricht man von Monofilament-Klebebändern. In einer vorteilhaften Weiterbildung des Erfindungsgegenstands ist das Trägermaterial durch ein offenes Filamentgewebe verstärkt. In diesem Fall wird es als Crossfilament-Klebeband bezeichnet.

Die Trägerlage ohne Filamente ist üblicherweise bis zu 200 µm dick. In einer besonders vorteilhaften Ausführungsform der Erfindung weist die Trägerlage ohne Filamente eine Dicke von 10 bis 100 µm, insbesondere von 20 bis 40 µm auf.

Der Trägerlage werden als Filamente hochfeste Fasern, Zwirne, Mischzwirne oder Fäden mit geringer Reißdehnung beigefügt.

Die Einzelfilamente sind vorzugsweise Endlosfilamente und/oder weisen eine Feinheit zwischen 4 und 8 dtex, vorzugsweise 5 dtex auf. In einer vorteilhaften Ausführungsform sind alle Filamente Endlosfilamente.

In einer bevorzugten Ausführungsform befinden sich zwischen 1 und 30 Filamente pro Zentimeter Breite in dem Trägermaterial, insbesondere zwischen 1 und 5.

Des Weiteren hat es sich als vorteilhaft erwiesen, wenn die Einzelfilamente in einer zum Trägermaterial parallel ausgerichteten Lage oder höchstens in drei zur Trägerlage parallel ausgerichteten Lagen regelmäßig angeordnet sind.

In einer Lage sind dabei jeweils die Filamente parallel nebeneinander angeordnet.

Die Filamente können dabei aus organischen oder anorganischen Materialien bestehen, so beispielsweise und bevorzugt aus Glas, Kohlenstoff (Carbon), Kombinationen aus beiden Fasertypen, Aramidfasern oder speziellen Polyamiden, aus verstreckten Polymerfasern wie Polyesterfasern, Polypropylenfasern, Polyethylenfasern, weiterhin können die Verstärkungsfasern wenigstens teilweise gefärbt sein, um das Trägermaterial optisch ansprechender zu gestalten. Auf diese Art ist es problemlos möglich, die verstärkten Träger optisch zu differenzieren. Hierzu bieten sich insbesondere gefärbte Glas- oder Polymerfäden an.

Die Trägerlage ist weiter vorzugsweise mit den Filamenten laminiert. Die Filamente sollten fest mit der Trägerlage verbunden sein. Dies kann durch direktes Einarbeiten oder Einlassen der Fasern, Fäden oder Zwirne beziehungsweise Mischzwirne in den Träger geschehen, beispielsweise Einweben bei Geweben, Einstricken bei Gewirken, Einbetten beziehungsweise Einfügen beim Herstellungsverfahren von Folien, Gelen oder Schaumstoffen und Vliesen.

Die Filamente können aber auch nachträglich mit der Trägerlage verbunden werden, beispielsweise seien das Verschweißen oder das Auflaminieren mit einer entsprechenden Verbindungsschicht genannt.

Weiter werden die Verstärkungen vorzugsweise gezielt entsprechend der Beanspruchungsrichtung des Trägermaterials eingefügt, das heißt in erster Linie in Längsrichtung. Sie können jedoch auch, wenn dies zweckdienlicher ist, zusätzlich in Quer- oder Schrägrichtung oder beispielsweise kurven-, spiral- oder zickzack-förmig oder regellos verlaufen.

Vorzugsweise ist die auf dem Trägermaterial aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar.

Die Klebemasse kann aus der Gruppe der Naturkautschuke oder der Synthesekautschuke oder aus einem beliebigen Blend aus Naturkautschuken und/oder Synthesekautschuken gewählt werden, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.

Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder ß-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.

Auf die Darstellung des Wissensstandes im "Handbook of Pressure Sensitive Adhesive Technology" von Donatas Satas (van Nostrand, 1989) sei ausdrücklich hingewiesen.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind solche, wie sie in dieser Schrift für die Stabilisierung der Folie aufgeführt werden.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Die Klebemasse kann in Längsrichtung in Form eines Streifens aufgebracht sein, der eine geringere Breite aufweist als die Trägerfolie des Klebebands. Je nach Verwendungsfall können auch mehrere parallele Streifen des Klebers auf der Trägerfolie beschichtet sein.

Die freie Oberseite der einseitig mit Klebemasse ausgerüsteten Klebebänder kann mit einem Trennmittel, auch Release genannt, versehen sein.

Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄- bis C₂₈-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew. %, besonders bevorzugt 13 bis 18 Gew.-% des trennwirksamen Bestandteils.

Zur Erhöhung der Kohäsion zwischen der Klebemasse und dem Trägermaterial oder zwischen Trennlack und Trägermaterial kann das Trägermaterial einer Coronabehandlung unterzogen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Als Trennmaterial eignet sich bevorzugt ein nicht-fusselndes Material wie eine Kunststofffolie oder ein gut verleimtes, langfaseriges Papier.

Die Klebebänder weisen insbesondere Lauflängen von 1000 bis 30.000 m auf. Als Breite der Rollen werden üblicherweise 10, 15, 19, 25 und 30 mm gewählt.

Besonders vorteilhaft lässt sich ein einseitig klebend ausgerüstetes Klebeband verwenden, wobei der Auftrag an Klebemasse vorzugsweise zwischen 30 bis 100 g/m², weiter vorzugsweise zwischen 60 bis 80 g/m² liegt.

Das Trägermaterial wird ein- oder beidseitig, vorzugsweise einseitig, mit (Haft)kleber aus Lösung oder Dispersion oder 100 %ig (zum Beispiel aus der Schmelze) oder durch Coextrusion beschichtet.

Besonders vorteilhaft ist die erfindungsgemäße Schnittgeometrie bei Geweben, Gelegen oder filamentverstärkten Trägerlagen, nämlich dann, wenn Einschnitt und Schnitt so ausgeführt sind, dass zumindest ein Kettfaden in dem Gewebe oder Gelege oder zumindest ein im Wesentlichen parallel zur Querkante ausgerichtete Filament durchtrennt werden. Gemäß einer besonders vorteilhaften Ausführungsform sind die Einschnitte bei den genannten Trägern in Form einer Zick-Zack-Linie geformt, wobei sich an jeder medialen Spitze ein gerader Schnitt befindet, der exakt in Querrichtung verläuft.

Gemäß einer bevorzugten Ausführungsform der Erfindung werden zumindest zwei Kettfäden in dem Gewebe oder Gelege oder zumindest zwei im Wesentlichen parallel zur Querkante ausgerichtete Filament durchtrennt.

Auch hier ist vorteilhaft, wenn die Einschnitte in Form einer Zick-Zack-Linie geformt sind, wobei sich an jeder medialen Spitze ein gerader Schnitt befindet, der exakt in Querrichtung verläuft.

Gemäß einer weiteren bevorzugten Ausführungsform der Erfindung werden zwischen zwei und fünf Kettfäden in dem Gewebe oder Gelege oder zwischen zwei und fünf im Wesentlichen parallel zur Querkante ausgerichtete Filamente durchtrennt.

Auch hier ist vorteilhaft, wenn die Einschnitte in Form einer Zick-Zack-Linie geformt sind, wobei sich an jeder medialen Spitze ein gerader Schnitt befindet, der exakt in Querrichtung verläuft.

Gemäß einer bevorzugten Ausführungsform der Erfindung werden genau zwei Kettfäden in dem Gewebe oder Gelege oder genau zwei im Wesentlichen parallel zur Querkante ausgerichtete Filamente durchtrennt.

Auch hier ist vorteilhaft, wenn die Einschnitte in Form einer Zick-Zack-Linie geformt sind, wobei sich an jeder medialen Spitze ein gerader Schnitt befindet, der exakt in Querrichtung verläuft.

Die Überlegenheit der erfindungsgemäßen Schnittgeometrie zeigt der im Folgenden näher beschriebene Versuch, bei dem ein Gewebe mit einer Breite von 25 mm mit unterschiedlichen Schneidmessern geschnitten wurde. Anschließend wurden die geschnittenen Gewebe auf einen Streifen mit einer Länge von 30 cm abgelängt und insgesamt zehn Probanden vorgelegt, die versuchen sollten, den Streifen in Querrichtung durchzureißen.

Das Gewebe bestand aus PET-Fasern, und zwar mit 9,8 Kettfäden/1 cm, wobei die Kettfäden ein Garngewicht von 76 dtex aufwiesen, und 16,5 Schussfäden/1 cm, wobei die Schussfäden ein Garngewicht von 167 dtex aufwiesen.

Die Personen rissen jeweils drei Muster von jedem Zuschnitt durch und sollten subjektiv beurteilen, wie gut oder schlecht sich der Zuschnitt handeinreißen ließ.

In der Tabelle 1 sind Muster gezeigt, die den bekannten Stand der Technik widerspiegeln. Beim ersten Muster ist das Gewebe nur geschnitten, ohne dass die Kante mit einem speziellen Schnitt versehen worden ist.

Die anderen drei Muster stellen den bekannten Zick-Zack-Schnitt dar.

Die Herstellung eines Zackenschnitts erfolgt mit dem nachfolgend erläuterten Verfahren:

Zum Längsschneiden der mit Klebemasse beschichteten Folienbahn werden rotierende Quetsch-Schneidmesser, die in ihrer Schneide-Geometrie als Zick-Zack-Messer ausgestaltet sind, eingesetzt.

| | |
|---|---|
| Höhe Zick-Zackmesser | 0,2 mm |
| Zähnezahl: | 604 |
| Schneidphasenwinkel: | 90° |
| Zahntiefe: | Maß "A" |
| Schnittflächenbreite SB: | < 0,05 mm |

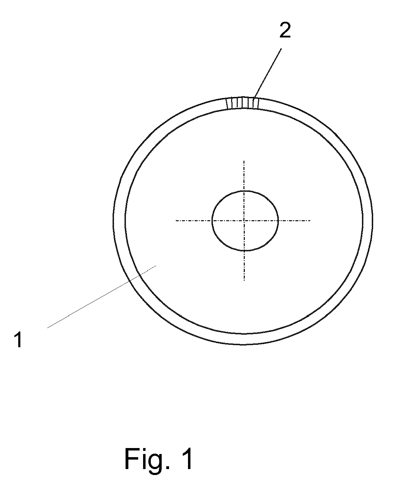

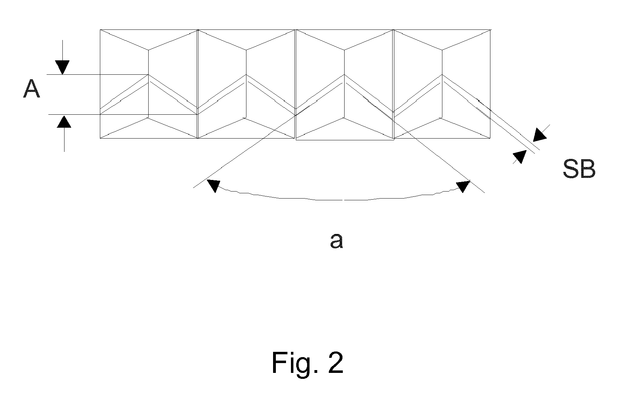

In den Figuren 1 und 2 ist ein Quetsch-Schneidmesser 1 gezeigt, das den aus dem Stand der Technik bekannten Zick-Zack- oder Zackenschnitt erzeugt. Das Messer 1 hat 604 Zähne 2. Der Schneidphasenwinkel α beträgt α = 90°. Die Zahntiefe A beträgt beispielsweise 0,2 mm, die Schnittflächenbreite SB liegt unter 0,05 mm.

Es zeigt sich, dass obwohl das Zick-Zackmesser mit Maß "A" = 2,0 mm bereits zwei Kettfäden im Kantenbereich durchtrennte, keine signifikante Verbesserung der Handeinreißbarkeit zu erzielen war.

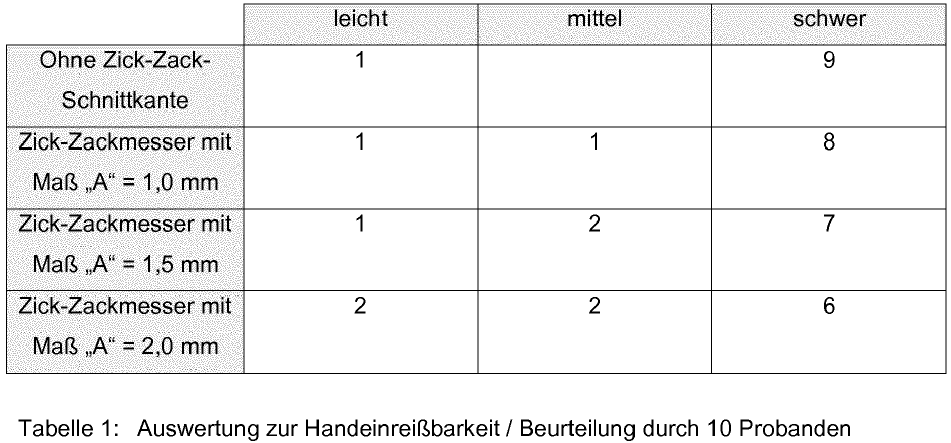

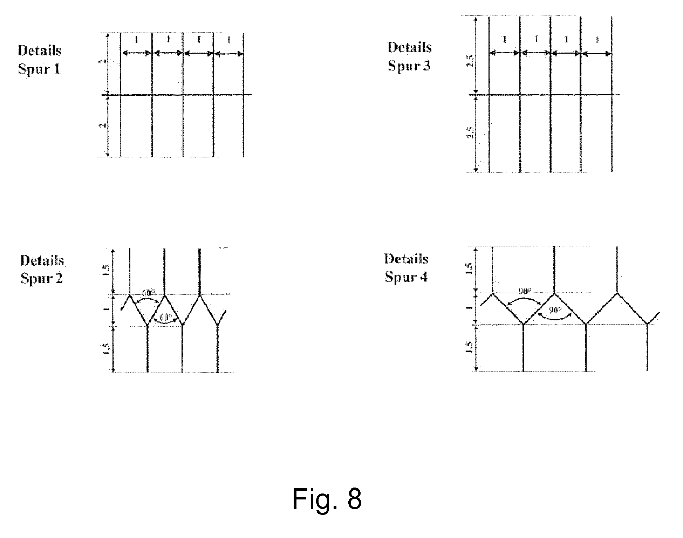

In der Tabelle 2 sind die in der Figur 8 dargestellten Messergeometrien untersucht worden. Spur 1 und Spur 3 sind Messer, die zu geraden Einschnitten im Kantenbereich des Gewebeträgers führten und die, obwohl mindestens zwei Kettfäden durchtrennt worden sind, zu kaum merklichen Verbesserung der Handeinreißbarkeit führten.

Die dargestellten Spuren spiegeln die Liniengeometrie wider, die man erhält, wenn das drehende Kreismesser am Außenumfang abgewickelt wird. Die Spuren entsprechen dem Schnittbild, das sich in den damit geschnittenen Klebebändern zeigt.

Erst die erfindungsgemäße Kombination von Einschnitten und Schnitten (Spur 2 und Spur 4) führte zu einer signifikanten Verbesserung der Handeinreißbarkeit.

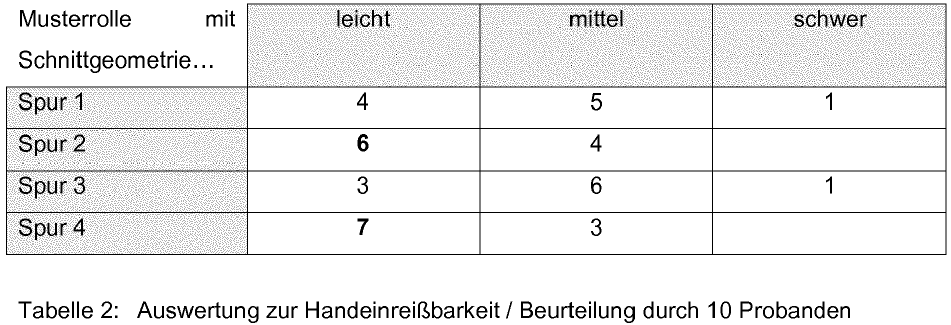

Spur 2 und Spur 4 mit den angegebenen Maßen stellen besonders vorteilhafte Ausführungsformen der Erfindung dar.

Zur Herstellung der Einschnitte und Schnitte können alle handelsüblichen Schneid-, Schlitz- oder Stanzverfahren benutzt werden, die die benötigte Präzision mitbringen und/oder für das Einbringen von Einschnitten in dem gewünschten Abstand geeignet sind. Darüber hinaus gewinnt der Einsatz von Lasern zunehmend an Bedeutung.

## Patentansprüche

1. Klebeband mit einem Trägermaterial, auf das zumindest einseitig eine Klebemasse aufgetragen ist, wobei das Trägermaterial zumindest an einer der in Maschinenrichtung verlaufenden Kante zumindest einen insbesondere zackenförmigen Einschnitt aufweist, der in einer Spitze endet und dessen Spitze durch einen an der Spitze beginnenden und in medialer Richtung verlaufenden Schnitt verlängert ist.

2. Klebeband nach Anspruch 1,
**dadurch gekennzeichnet, dass**
das Trägermaterial zumindest an einer der in Maschinenrichtung verlaufenden Kante mehrere insbesondere zackenförmige Einschnitte auf, der in einer Spitze enden, wobei zumindest die Spitze eines insbesondere zackenförmigen Einschnitts durch einen an der Spitze beginnenden und in medialer Richtung verlaufenden Schnitt verlängert ist.

3. Klebeband nach Anspruch 1 oder 2,
**dadurch gekennzeichnet, dass**
das Trägermaterial zumindest an einer der in Maschinenrichtung verlaufenden Kante mehrere insbesondere zackenförmige Einschnitte auf, wobei zumindest jede fünfte, vorzugsweise jede vierte, weiter vorzugsweise jede dritte, besonders vorzugsweise jede zweite, ganz besonders jede mediale Spitze der insbesondere zackenförmigen Einschnitte durch einen an der Spitze beginnenden und in medialer Richtung verlaufenden Schnitt verlängert ist, wobei weiter vorzugsweise die zackenförmigen Einschnitte eine geschlossene Zick-Zack-Linie bilden.

4. Klebeband nach zumindest einem der Ansprüche 1 bis 3,
**dadurch gekennzeichnet, dass**
das Trägermaterial an beiden in Maschinenrichtung verlaufenden Kanten zackenförmige Einschnitte aufweist, bei denen zumindest mehrere, vorzugsweise alle Spitzen durch einen an der Spitze beginnenden und in medialer Richtung verlaufenden Schnitt verlängert sind.

5. Klebeband nach zumindest einem der vorherigen Ansprüche,
**dadurch gekennzeichnet, dass**
die Einschnitte von einem Streckenzug aus bevorzugt gleich langen Strecken gebildet wird, die n Punkte miteinander verbinden, wobei n zwischen 1 und 9 liegen kann und eine ungerade Zahl ist, weiter vorzugsweise sind die zwischen den einzelnen Strecken vorhandenen Winkel ebenfalls alle gleich groß.

6. Klebeband nach zumindest einem der vorherigen Ansprüche,
**dadurch gekennzeichnet, dass**
die Einschnitte eine geschlossene Zick-Zack-Linie bilden.

7. Klebeband nach zumindest einem der vorherigen Ansprüche, **dadurch gekennzeichnet, dass**
die Einschnitte beabstandet voneinander oder unmittelbar hintereinander angeordnet sind oder abwechselnd beabstandet voneinander und unmittelbar hintereinander.

8. Klebeband nach zumindest einem der vorherigen Ansprüche,
**dadurch gekennzeichnet, dass**
der Winkel an den medialen Spitzen der bevorzugt zackenförmigen Einschnitte zwischen 10° und 170°, weiter vorzugsweise zwischen 60° und 120° liegt.

9. Klebeband nach zumindest einem der vorherigen Ansprüche,
**dadurch gekennzeichnet, dass**
die von den medialen Spitzen ausgehenden Schnitte von Schnitten gebildet werden, die sich von den medialen Spitzen ausgehend in Richtung der Mitte des Trägermaterials, also in medialer Richtung erstrecken., insbesondere die Schnitte aus einem Geradenstück bestehen, das vorzugsweise exakt in Querrichtung ausgerichtet ist.

10. Klebeband nach zumindest einem der vorherigen Ansprüche,
**dadurch gekennzeichnet, dass**
die Schnitte alle die gleiche Länge aufweisen.

11. Klebeband nach zumindest einem der vorherigen Ansprüche,
**dadurch gekennzeichnet, dass**
die zackenförmigen Einschnitte gemessen von der in Maschinenrichtung verlaufenden Kante in Querrichtung eine Tiefe von 0,3 bis 6 mm, insbesondere bis 1 bis 3 mm, ganz besonders 2 mm bis 2,5 mm aufweisen.

12. Klebeband nach zumindest einem der vorherigen Ansprüche,
**dadurch gekennzeichnet, dass**
die Schnitte eine Länge von 0,3 bis 4 mm, insbesondere bis 1 bis 3 mm, ganz besonders 2 mm bis 2,5 mm aufweisen.

13. Klebeband nach zumindest einem der vorherigen Ansprüche,
**dadurch gekennzeichnet, dass**
als Trägermaterial ein Gewebe, ein Gelege oder eine filamentverstärkte Trägerlage eingesetzt werden, wobei Einschnitt und Schnitt so ausgeführt sind, dass zumindest ein Kettfaden in dem Gewebe oder Gelege oder zumindest ein im Wesentlichen parallel zur Querkante ausgerichtete Filament durchtrennt werden, vorzugsweise zumindest jeweils zwei, weiter vorzugsweise jeweils zwischen zwei und fünf.

14. Klebeband nach zumindest einem der vorherigen Ansprüche,
**dadurch gekennzeichnet, dass**
der Auftrag an Klebemasse auf das Trägermaterial zwischen 30 bis 100 g/m², weiter vorzugsweise zwischen 60 bis 80 g/m² beträgt.
